# EUROPEAN PATENT SPECIFICATION

(11) **EP 2 993 159 B1**
(45) Date of publication and mention of the grant of the patent: **14.11.2018**
(21) Application number: 14887711.1
(22) Date of filing: 12.09.2014
(51) Int. Cl.: C02F 1/52, C02F 1/60, C02F 1/66, C02F 5/06, C02F 103/12, C02F 103/04, C02F 103/02, C02F 1/42, C02F 1/68, C02F 1/56, C02F 1/463, C02F 1/32, C02F 1/44, C02F 1/04, C02F 1/20, C02F 1/38

(54) **WATER TREATMENT DEVICE AND WATER TREATMENT METHOD**
WASSERBEARBEITUNGSVORRICHTUNG UND WASSERBEARBEITUNGSVERFAHREN
DISPOSITIF DE TRAITEMENT D'EAU ET PROCÉDÉ DE TRAITEMENT D'EAU

(30) Priority: 26.05.2014 JP 2014108624
(43) Date of publication of application: 09.03.2016
(73) Proprietor: Mitsubishi Heavy Industries Engineering, Ltd., Yokohama-shi, Kanagawa 220-8401 (JP)
(72) Inventor: UKAI, Nobuyuki, Tokyo 108-8215 (JP); OKINO, Susumu, Tokyo 108-8215 (JP); SUZUKI, Hideo, Tokyo 108-8215 (JP); NAKASHOJI, Hiroshi, Tokyo 108-8215 (JP); YOSHIOKA, Shigeru, Tokyo 108-8215 (JP); KOMATSU, Tomomi, Tokyo 108-8215 (JP)
(74) Representative: Henkel, Breuer & Partner
(86) International application number: PCT/JP2014/074321
(87) International publication number: WO 2015/181998

(56) References cited:
- WO-A2-03/008336
- DK-B1- 171 509
- JP-A- S 525 956
- JP-A- S5 190 160
- JP-A- S5 573 399
- JP-A- H02 227 185
- JP-A- 2001 157 894
- JP-A- 2004 097 932
- JP-A- 2004 141 799
- JP-A- 2014 064 983
- KR-A- 20110 087 512
- US-A- 2 287 486
- US-A- 5 453 206
- F. K. LINDSAY ET AL: "Removal of Silica from Water by Sodium Aluminate", INDUSTRIAL & ENGINEERING CHEMISTRY, vol. 31, no. 7, 1 July 1939 (1939-07-01), pages 859-861, XP055006550, ISSN: 0019-7866, DOI: 10.1021/ie50355a016

## Description

### TECHNICAL FIELD

The present invention relates to a water treatment device and a water treatment method, and particularly relates to a water treatment device and a water treatment method that can efficiently remove soluble silica in water to be treated.

### BACKGROUND ART

Conventionally, wastewater treatment methods that remove silica from wastewater that is discharged from chemical mechanical polishing (CMP) process in a production step for semiconductor devices have been proposed (e.g. see Patent Document 1). In the wastewater treatment method, wastewater containing soluble silica is treated with a coagulant to coagulate the soluble silica, and then the coagulated soluble silica is removed by a microfiltration membrane. Thereafter, by periodically flushing the microfiltration membrane, soluble silica that had become solids is removed from the membrane surface of the microfiltration membrane.

### PRIOR ART DOCUMENT

### Patent Literature

Patent Document 1: US Patent No. 5904853.

Patent documents US 2 287 486, WO03/008336, KR 2011 0087 512 AND US 5 453 206 are some further examples of known soluble silica removing methods and devices.

### SUMMARY OF INVENTION

### Technical Problem

However, since the soluble silica is coagulated to remove by adding a coagulant in the water treatment method described in Patent Document 1, the soluble silica cannot be always removed sufficiently and the silica concentration in the wastewater cannot be reduced sufficiently.

The present invention has been completed in the light of such circumstances, and an object of the present invention is to provide a water treatment device as in claim 1 and a water treatment method as in claim 4 that can efficiently remove soluble silica in water to be treated.

### Solution To Problem

A water treatment device of the present invention is defined in claim 1 and comprises: a soluble silica deposition section that deposits soluble silica dissolved in water to be treated, the water to be treated having a concentration of aluminate ion represented by general formula (1) below and a pH that are in predetermined ranges; and a solid-liquid separating section that separates the deposited soluble silica from the water to be treated to obtain treated water formed by removing the soluble silica from the water to be treated.

[Al(OH)₄]⁻... Formula (1)

According to this water treatment device, soluble silica in the water to be treated can be more efficiently removed compared to the case where the soluble silica is removed using a coagulant to coagulate the soluble silica since a compound, which is formed as a result of a reaction between aluminate ion and the soluble silica present in the water to be treated having a pH within the predetermined range, is deposited in the water to be treated.

Therefore, the water treatment device that can efficiently remove soluble silica in water to be treated can be achieved.

The water treatment device of the present invention comprises an aluminate ion adding section by which the aluminate ion concentration in the water to be treated is adjusted to be within the predetermined range by adding an aluminate ion additive to the water to be treated in the soluble silica deposition section.

In the water treatment device of the present invention, the aluminate ion additive is sodium aluminate.

The water treatment device of the present invention comprises pH adjusting agents adding section arranged downstream of a magnesium ion adding section and by which the pH of the water to be treated is adjusted to a pH of 5.5 or higher by adding pH adjusting agents to the water to be treated.

The water treatment device of the present invention comprises a seed material adding section by which soluble silica that is deposited in advance from the water to be treated is added, as a seed material, to the water to be treated in the soluble silica deposition section.

The water treatment device of the present invention comprises a magnesium ion adding section by which a magnesium ion additive is added to the water to be treated.

The water treatment device of the present invention preferably further comprises an electrolysis apparatus by which aluminate ion-containing water generated by electrolyzing a part of the water to be treated is supplied to the aluminate ion adding section as the aluminate ion additive.

The water treatment device of the present invention comprises: a soluble silica deposition section that deposits soluble silica dissolved in water to be treated from the water to be treated, the water to be treated containing the soluble silica and having a pH of 5.5 or higher, by adding sodium aluminate; and a solid-liquid separating section that separates the deposited soluble silica from the water to be treated to remove the soluble silica from the water to be treated.

The water treatment device of the present invention comprises a treated water purifying section arranged downstream of the solid-liquid separating section and including at least one type selected from the group consisting of: an evaporating section by which purified treated water is obtained by evaporating the treated water; a crystallizing section by which purified treated water is obtained by crystallizing the treated water; and an ion exchange resin section by which purified treated water is obtained by ion-exchanging the treated water.

The water treatment device of the present invention preferably further comprises an aluminum ion treating section by which aluminum ion contained in the treated water to be supplied to the treated water purifying section is removed.

A water treatment method of the present invention is defined in claim 4 and comprises: a deposition step of depositing soluble silica dissolved in water to be treated, the water to be treated having a concentration of aluminate ion represented by general formula (1) below and a pH that are in predetermined ranges; and a solid-liquid separating step of separating the deposited soluble silica from the water to be treated to obtain treated water formed by removing the soluble silica from the water to be treated.

[Al(OH)₄]⁻.. Formula (1)

According to this water treatment method, soluble silica in water to be treated can be more efficiently removed compared to the case where the soluble silica is removed using a coagulant to coagulate the soluble silica since a compound, which is formed as a result of a reaction between aluminate ion and the soluble silica present in the water to be treated having a pH within the predetermined range, is deposited in the water to be treated. Therefore, the water treatment method that can efficiently remove soluble silica in water to be treated can be achieved.

In the water treatment method of the present invention, an aluminate ion concentration in the water to be treated is adjusted to be within the predetermined range by adding an aluminate ion additive to the water to be treated.

In the water treatment method of the present invention, the aluminate ion additive is sodium aluminate.

In the water treatment method of the present invention, the pH of the water to be treated is adjusted to a pH of 5.5 or higher by adding pH adjusting agents to the water to be treated.

In the water treatment method of the present invention, the soluble silica is deposited by adding soluble silica that is deposited in advance from the water to be treated, as a seed material, to the water to be treated in the soluble silica deposition section.

In the water treatment method of the present invention, the soluble silica is deposited by adding a magnesium ion additive to the water to be treated.

In the water treatment method of the present invention, aluminate ion-containing water generated by electrolyzing a part of the water to be treated is preferably added to the water to be treated as the aluminate ion additive.

The water treatment method of the present invention comprises: a deposition step that deposits soluble silica from water to be treated, the water to be treated containing the soluble silica and having a pH of 5.5 or higher, by adding sodium aluminate; and a solid-liquid separating step of separating the deposited soluble silica from the water to be treated to remove the soluble silica from the water to be treated.

The water treatment method of the present invention comprises a purification step in which purification is performed by a treated water purifying section including at least one type selected from the group consisting of: an evaporating section by which purified treated water is obtained by evaporating the treated water; a crystallizing section by which purified treated water is obtained by crystallizing the treated water; and an ion exchange resin section by which purified treated water is obtained by ion-exchanging the treated water.

In the water treatment method of the present invention, the aluminum ion contained in the treated water to be supplied to the treated water purifying section is preferably removed by an aluminum ion treating section.

### Advantageous Effects of Invention

According to the present invention, a water treatment device and a water treatment method that can efficiently remove soluble silica in water to be treated can be achieved.

### Brief Description of Drawings

FIG. 1 is a schematic diagram of a water treatment device according to the first embodiment (not part of the invention).
FIG. 2 is a diagram illustrating the relationship between the pH of water to be treated and the solubility of soluble silica to the water to be treated.
FIG. 3 is an explanatory diagram illustrating the solubility of soluble silica in the presence of aluminate ion.
FIG. 4A is a diagram illustrating the relationship between the pH of water to be treated after adding aluminum ion and the concentration of SiO₂.
FIG. 4B is a diagram illustrating the relationship between the pH of water to be treated after adding aluminum ion and the removal ratio of SiO₂.
FIG. 5 is a diagram illustrating the relationship between the concentration ratio of aluminum (mol Al/mol SiO₂) and the removal ratio of SiO₂ in the water treatment device of the first embodiment.
FIG. 6 is a schematic diagram of a water treatment device according to the second embodiment (not part of the invention).
FIG. 7 is a schematic diagram of a water treatment device according to the third embodiment (not part of the invention).
FIG. 8A is a diagram illustrating the relationship for the SiO₂ concentration in water to be treated after adding magnesium ion.
FIG. 8B is a diagram illustrating the relationship for the SiO₂ removal ratio in water to be treated after adding magnesium ion.
FIG. 9 is a schematic diagram of a water treatment device according to the fourth embodiment (not part of the invention).
FIG. 10 is a schematic diagram of a water treatment device according to the fifth embodiment which is according to the present invention.
FIG. 11 is a schematic diagram of a water treatment device according to the sixth embodiment (not part of the invention).
FIG. 12 is a schematic diagram of a water treatment device according to the seventh embodiment (not part of the invention).
FIG. 13 is a schematic diagram of a soluble silica removing section.
FIG. 14 is a schematic diagram of a water treatment device according to the first Application Example.
FIG. 15 is a schematic diagram of a water treatment device according to the second Application Example.
FIG. 16 is a schematic diagram of a water treatment device according to the third Application Example.
FIG. 17 is a schematic diagram of a water treatment device according to the fourth Application Example.
FIG. 18 is a diagram illustrating the results of the Working Example of the present invention and the Comparative Example.

### Description of Embodiments

In cooling water for cooling towers of plant facilities or the like, soluble silica (SiO₂) in cooling water may be condensed and deposited as a scale since a part of the cooling water is evaporated due to the heat exchange between the cooling water and exhaust gas at a high temperature exhausted from a boiler or the like. Because of this, the soluble silica contained in the cooling water needs to be deposited and removed periodically to maintain the soluble silica concentration at low.

An example of a method of removing soluble silica in water is a coagulation and precipitation process using an inexpensive aluminum-based coagulant (Al₂(SO₄)₃) and polyaluminum chloride ([Al₂(OH)nCl₆-n]m²)). Typically, in the coagulation and precipitation process, an aluminum-based coagulant is deposited as a positively charged aluminum hydroxide (Al(OH)₃: solid) and negatively charged colloids are coagulated on this aluminum hydroxide in the aqueous solution to precipitate. The aluminum hydroxide is weakly, negatively charged in water having a pH of 8 or higher, and is strongly, positively charged in water having a pH of 7 or lower. Because of this, the coagulation and precipitation using an aluminum-based coagulant is typically performed at a pH of 7 or lower, at which the aluminum hydroxide is positively charged, rather than at a pH of 8 or higher, at which the aluminum hydroxide is negatively charged.

The present inventors have focused on the fact that, in soluble silica-containing water to be treated having a pH within a predetermined range and an aluminate ion concentration within a predetermined range, a compound of aluminate ion and soluble silica is deposited in the water to be treated. Therefore, the present inventors have found that soluble silica contained in the water to be treated can be removed more efficiently from the water to be treated than conventional methods by subjecting the compound of aluminate ion and the soluble silica to deposition in the water to be treated, and thus completed the present invention.

Hereinafter, embodiments will be described in detail while referring to the attached drawings. Note that the present invention is as defined by the appended claims. Furthermore, embodiments described below can be suitably combined.

### First embodiment (not part of the invention)

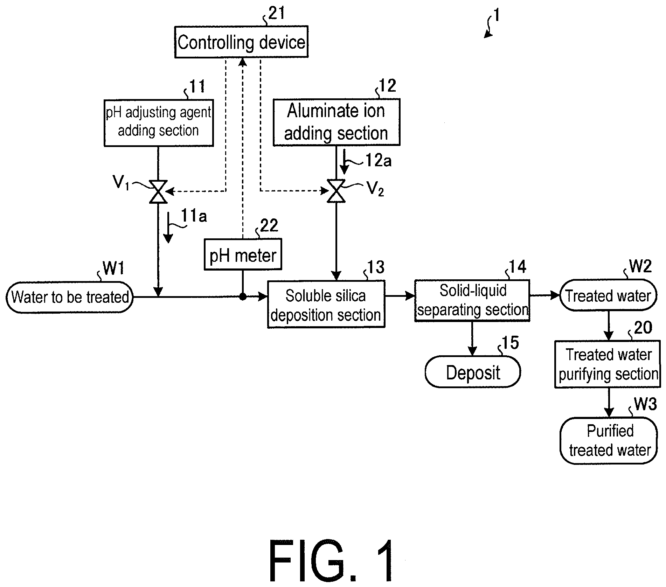

FIG. 1 is a schematic diagram of a water treatment device 1 according to the first embodiment.

As illustrated in FIG. 1, the water treatment device 1 of this embodiment comprises: pH adjusting agents adding section 11 by which pH adjusting agents 11a is added to water to be treated W1 containing soluble silica to adjust the pH of the water to be treated W1 to be within a predetermined range; an aluminate ion adding section 12 by which an aluminate ion additive 12a represented by general formula (1) below is added to the water to be treated W1 to adjust the aluminate ion concentration in the water to be treated W1 to be within a predetermined range; a soluble silica deposition section 13 by which soluble silica is deposited from the water to be treated W1 having a predetermined range of pH and a predetermined range of aluminate ion concentration (hereinafter, also simply referred to as "deposition section 13"); and a solid-liquid separating section 14 by which treated water W2 is obtained by solid-liquid separating the soluble silica that is deposited from the water to be treated W1 and the water to be treated W1. The treated water W2 becomes purified treated water W3 after being purified by a treated water purifying section 20. The added amount of the pH adjusting agents 11a from the pH adjusting agents adding section 11 and the added amount of the aluminate ion additive 12a from the aluminate ion adding section 12 are controlled by a controlling device 21.

[Al(OH)₄]⁻... Formula (1)

The water to be treated W1 is not particularly limited as long as the water to be treated W1 contains soluble silica, and examples of the water to be treated W1 include cooling water (blow-down water) of a cooling tower in a power plant or plant facilities and wastewater from semiconductor manufacturing facilities, boiler supply water, wastewater containing silica discharged from manufacturing facilities of supply water for boilers, well water, hot spring, condensed water or warm water of geothermal plant, industrial wastewater, wastewater from mining such as mine drainage and water associated with oil gas, sewage and treated water thereof, seawater, brine, surface water, and the like. The water to be treated preferably has a pH of 5.5 or higher from the perspective of efficiently depositing the soluble silica contained in the water to be treated.

The pH adjusting agents adding section 11 adds pH adjusting agents 11a such as various acids and various bases to the water to be treated W1 to adjust the pH of the water to be treated W1 to be within a predetermined range. Examples of the pH adjusting agents 11a include various acids such as hydrochloric acid, sulfuric acid, and citric acid, and various bases such as sodium hydroxide and calcium hydroxide. The pH of the water to be treated W1 is not particularly limited as long as the pH is in a range that can deposit the soluble silica contained in the water to be treated W1.

The aluminate ion adding section 12 adds an aluminate ion additive represented by general formula (1) above to the water to be treated W1. By adding the aluminate ion additive to the water to be treated W1, the soluble silica contained in the water to be treated W1 can be efficiently removed since a compound of the aluminate ion additive and the soluble silica contained in the water to be treated W1 (e.g. Mg₅Al[AlSi₃O₁₀(OH)₂](OH)₆, NaAlO₂·(SiO₂)₃, and the like) is deposited.

The aluminate ion additive is not particularly limited as long as the aluminate ion additive produces aluminate ion in the water to be treated W1, and examples of the aluminate ion additive include various aluminates such as lithium aluminate, sodium aluminate (aluminum sodium tetrahydroxide), potassium aluminate, strontium aluminate, calcium aluminate, and magnesium aluminate; aluminate ion-containing water; and the like. Among these, sodium aluminate is preferable from the perspective of efficient removal of the soluble silica from the water to be treated W1.

The configuration of the deposition section 13 is not particularly limited as long as the deposition section 13 can deposit the soluble silica. For example, the deposition section 13 may have a mixing vessel provided with a predetermined stirring device, or may have no mixing vessel. In the deposition section 13 having a mixing vessel, the aluminate ion additive is added, as necessary, to the water to be treated W1 having a pH adjusted to the predetermined range in the mixing vessel, and mixed by stirring to deposit the soluble silica. Because of this, the aluminate ion additive is rapidly and uniformly mixed, and thus the soluble silica is deposited in a reaction time of several seconds to several tens of seconds without coagulating aluminate ion and silica. With regard to the stirring speed, the stirring may be performed at a slow speed or high speed. By stirring rapidly at a stirring speed of 100 rpm or higher, the volume of the mixing vessel may be set smaller. Furthermore, in the deposition section 13 having no mixing vessel, the aluminate ion additive is mixed, as necessary, in a pipe by performing line injection/line mixing from a branch pipe provided in the pipe in which the water to be treated W1 flows. In this case, mixing efficiency can be enhanced by providing a component that disturbs the flow, such as a static mixer or elbow, in the pipe.

Note that, in this embodiment, "deposition of soluble silica" refers to the deposition of a compound of the soluble silica and aluminate ion, deposited as a solid, from the liquid. As the form of the deposition, the compound of the soluble silica and aluminate ion may be deposited as amorphous, or the compound of the soluble silica and aluminate ion may be deposited as crystal. Furthermore, the deposition section 13 may use a coagulant to promote the solid-liquid separation of the soluble silica and the water to be treated W1. Examples of the coagulant include aluminum salts, iron salts, polymer coagulants, and the like.

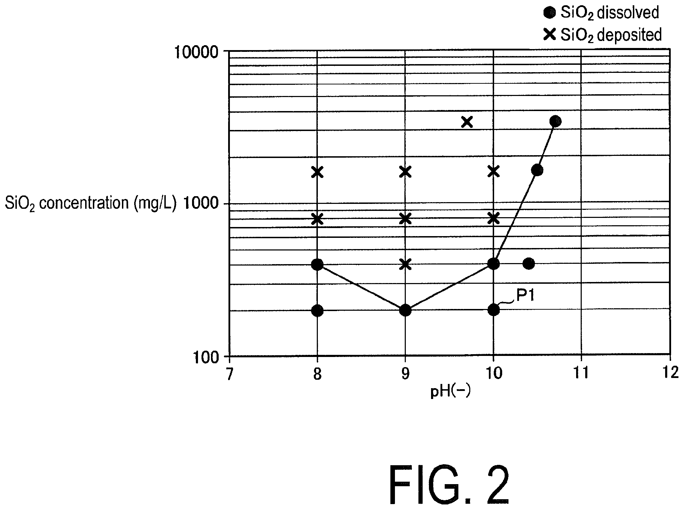

Now, the solubility of the soluble silica (SiO₂) in the water to be treated of the water treatment device 1 according to this embodiment will be described. FIG. 2 is a diagram illustrating the relationship between the pH of the water to be treated and the solubility of the soluble silica to the water to be treated. Note that FIG. 2 shows the observation results of SiO₂ deposition for the case where, after an aqueous solution in which the soluble silica is dissolved is diluted to have a predetermined SiO₂ concentration at 25°C under alkaline conditions, an acid is added to lower the pH. As shown in FIG. 2, for the water treatment device 1 according to this embodiment, the SiO₂ concentration at which the soluble silica deposits is minimum when the pH of the water to be treated is 9, and the SiO₂ concentration at which the soluble silica deposits tends to increase when the pH is lower than 9 or greater than 9.

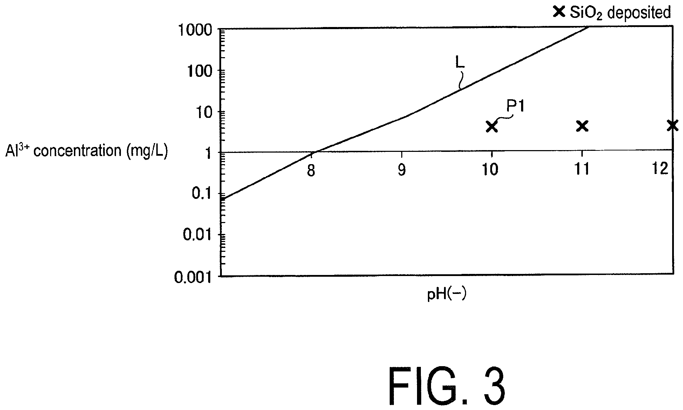

FIG. 3 is an explanatory diagram illustrating the solubility of the soluble silica in the presence of aluminate ion. Note that, in the example shown in FIG. 3, an example where pH was varied under a condition of 200 mg/L, which is the saturated solution of the soluble silica at pH 9 shown in FIG. 2, is shown. The straight line L in FIG. 3 describes the saturation solubility of aluminate ion as an aluminate ion additive. As shown in FIG. 3, the solubility of the aluminate ion (shown in logarithmic scale) is in a proportional relationship with the pH. As the pH increases, the solubility of the aluminate ion also increases (see the straight line L in FIG. 3). In the condition where no aluminate ion is present (FIG. 2), the soluble silica is dissolved in pH 10 of the water to be treated W1; however, in the presence of the aluminate ion (FIG. 3), the soluble silica deposits as deposit in pH 10. That is, the soluble silica deposits as deposit in the presence of aluminate ion even when the concentration of the soluble silica is equal to or less than that of the saturation solubility of the soluble silica shown in FIG. 2 (see point PI of FIG. 2 and FIG. 3). It is thought that this result is caused by the deposition of a compound of the sodium aluminate and the soluble silica as deposit caused by the lowering of the solubility of the soluble silica due to the formation of the compound of the sodium aluminate and the soluble silica.

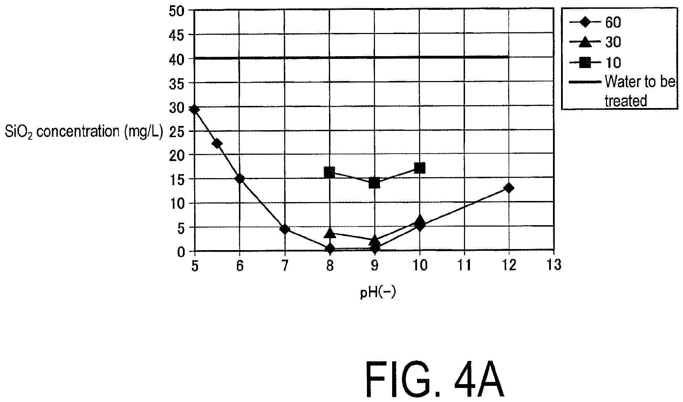

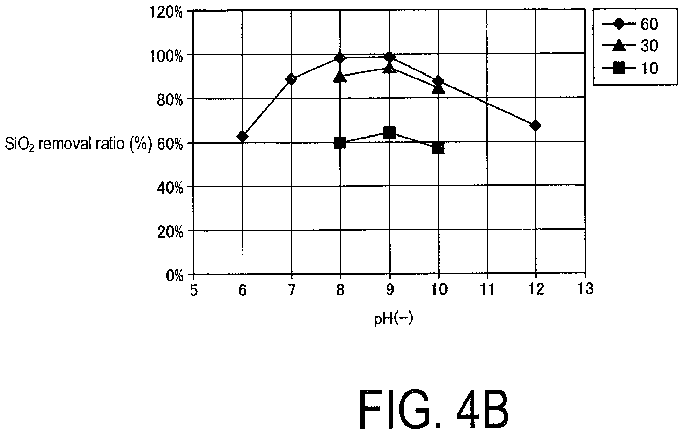

FIG. 4A is a diagram illustrating the relationship between the pH of the water to be treated W1 after adding aluminum ion and the concentration of SiO₂. FIG. 4B is a diagram illustrating the relationship between the pH of the water to be treated W1 after adding aluminum ion and the removal ratio of SiO₂. Note that, in the examples shown in FIG. 4A and FIG. 4B, the concentration of SiO₂ in the water to be treated at a temperature of 25°C is set to 40 mg/L, and examples having an aluminum concentration of 10 mg/L, 30 mg/L, or 60 mg/L are shown. As shown in FIG. 4A and FIG. 4B, it was found that, when the aluminum concentration of the water to be treated W1 is 30 mg/L, the concentration of SiO₂ in the water to be treated W1 significantly decreases and the removal ratio of the SiO₂ significantly increases compared to the case where the aluminum concentration of the water to be treated W1 is 10 mg/L. It was also found that the similar SiO₂ concentrations and removal ratios are achieved for the case where the aluminum concentration of the water to be treated W1 is 30 mg/L and for the case where the aluminum concentration of the water to be treated W1 is 60 mg/L. From the result, when the aluminum concentration of the water to be treated W1 is 10 mg/L or higher, the removal effect of soluble silica can be achieved. From the perspectives of the removal efficiency of soluble silica and reduction in the used amount of the aluminate ion additive that is added as necessary, it was found that the aluminum concentration of the water to be treated W1 is preferably 30 mg/L or lower, and more preferably 20 mg/L or lower.

Furthermore, when the pH of the water to be treated W1 after the addition of aluminum ion is lower than 5.5, the concentration of SiO₂ tends to increase. On the other hand, when the pH is 5.5 or higher, the concentration of SiO₂ rapidly decreases to 25 mg/L or lower, and the removal ratio of SiO₂ rapidly increases. Furthermore, at a pH exceeding pH 9, it was found that the concentration of SiO₂ increases again, and the removal ratio of SiO₂ tends to decrease. It is thought that this result is caused by deposition of a compound formed from [Al(OH)₄]- and soluble silica (SiO₂) in the pH of 5.5 or higher because the aluminate ion is present as Al³⁺ at a pH of 5.5 or lower, and is present as [Al(OH)₄]- at a pH of 5.5 or higher. Taking these results into account, from the perspective of efficiently reducing the concentration of soluble silica in the water to be treated W1, the pH of the water to be treated W1 is preferably 5.5 or higher, more preferably 6 or higher, even more preferably 7 or higher, and yet even more preferably 8 or higher, but preferably 13 or lower, more preferably 12 or lower, even more preferably 11 or lower, and yet even more preferably 10.5 or lower. Taking these into account, the range of pH is preferably 5.5 or higher but 12 or lower, more preferably 7 or higher but 11 or lower, and even more preferably 8 or higher but 10 or lower.

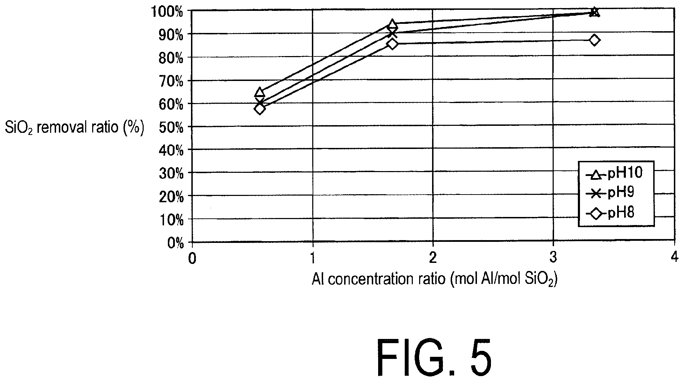

FIG. 5 is a diagram illustrating the relationship between the concentration ratio of aluminum (mol Al/mol SiO₂) and the removal ratio of SiO₂ in the water treatment device 1 of this embodiment. Note that, in the examples shown in FIG. 5, cases where the pH of the water to be treated is set at 8, 9, and 10 are shown. As shown in FIG. 5, with the water treatment device 1 according to this embodiment, although the removal ratio of SiO₂ is approximately 60% when the concentration ratio of the aluminum is approximately 0.6 (mol Al/mol SiO₂), once the concentration ratio of aluminum becomes 1.0 or higher, the removal ratio of SiO₂ significantly enhances, and the removal ratio becomes 90% when the concentration ratio of the aluminum is 1.7 (mol Al/mol SiO₂). Furthermore, it was found that high removal ratio of SiO₂ is maintained even when the concentration ratio of aluminum is further increased.

In the water treatment device 1 according to this embodiment, from the perspectives of the removal ratio of soluble silica and reducing the used amount of the aluminate ion additive, the aluminate ion concentration ratio in the water to be treated, in terms of the concentration ratio of the aluminum ion to the soluble silica (mol Al/mol SiO₂), is preferably 0.5 or greater, more preferably 1.0 or greater, even more preferably 1.5 or greater, but preferably 5.0 or less, more preferably 4.0 or less, and even more preferably 3.0 or less.

In the solid-liquid separating section 14, treated water W2 and deposit 15 are obtained by solid-liquid separating the compound of the aluminate ion and the soluble silica that is deposited in the soluble silica deposition section 13 from the water to be treated W1. The solid-liquid separating section 14 is not particularly limited as long as the solid-liquid separating section 14 can perform solid-liquid separation of the solid deposited in the water to be treated (deposit 15) and the treated water. Examples of the solid-liquid separating section 14 include a clarifier, hydrocyclone, sand filtration, and membrane separation apparatus, and the like. Examples of the deposit 15 include silica contained in the water to be treated, silica compounds originated from aluminum and magnesium, such as Mg₅Al[AlSi₃O₁₀(OH₂)](OH)₆ and NaAlSi₃O₈, aluminum compounds, and magnesium compounds.

The treated water purifying section 20 comprises at least one type of purifying apparatus selected from the group consisting of, for example, a reverse osmosis filtration apparatus having a reverse osmosis membrane, nanofiltration membrane (NF), electrodialysis (ED) equipment, electrodialysis reversal (EDR) equipment, electric deionizer (EDI), capacitive deionizer (CDI), evaporator, crystallizer, and ion exchange resin. In the treated water purifying section 20, purified treated water W3 is obtained by further purifying the treated water W2. At this point, since the soluble silica in the treated water W2 is sufficiently reduced by the soluble silica deposition section 13 and the solid-liquid separating section 14, it is possible to reduce the burden of performing maintenance for various purifying apparatuses described above.

The controlling device 21 is achieved by using a general purpose or dedicated purpose computer such as a central processing unit (CPU), read only memory (ROM), and random access memory (RAM), and a program that operates on the computer. The controlling device 21 controls the pH of the water to be treated W1 by changing the added amount of the pH adjusting agents 11a relative to the amount of the water to be treated W1 by adjusting the opening of a valve V₁ depending on the pH of the water to be treated W1 measured by a pH meter 22. Furthermore, the controlling device 21 controls the aluminum ion concentration in the water to be treated W1 by changing the added amount of the aluminate ion additive 12a relative to the amount of the water to be treated W1 by adjusting the opening of a valve V₂.

Next, the overall operation of the water treatment device 1 according to this embodiment will be described. To the water to be treated W1 (e.g. at pH 6.5) containing soluble silica such as cooling water of a plant device, as necessary, after the pH adjusting agents 11a is added from the pH adjusting agents adding section 11, the aluminate ion additive 12a is added from the aluminate ion adding section 12 in the soluble silica deposition section 13. Because of this, since the aluminate ion concentration and the pH of the water to be treated W1 are adjusted to be within predetermined ranges, the soluble silica is deposited in the soluble silica deposition section 13.

Here, the controlling device 21 controls the opening of the valves V₁ and V₂ to make the pH of the water to be treated W1 that is being introduced to the solid-liquid separating section 14 to be within a predetermined range (e.g. pH 8 or higher but 10 or less) based on the measured value of the pH of the water to be treated W1 measured by the pH meter 22, and to make the aluminum ion concentration ratio (mol Al/mol SiO₂) relative to the soluble silica to be within a predetermined range. Thereafter, the water to be treated W1 becomes the treated water W2 after being introduced to the solid-liquid separating section 14 to remove the deposit 15 by a membrane filtration apparatus or the like. Here, since the soluble silica in the water to be treated W1 is removed by forming a compound with aluminum ion, the concentration of the soluble silica in the water to be treated W1 can be significantly reduced. Thereafter, the treated water W2 is subjected to distillation, membrane separation, ion exchange, or the like in the treated water purifying section 20 to be further purified, and then supplied as the purified treated water W3.

As described above, according to the water treatment device 1 of this embodiment, soluble silica in the water to be treated W1 can be more efficiently removed compared to the case where the soluble silica is removed using a coagulant to coagulate the soluble silica since a compound, which is formed as a result of a reaction between aluminate ion and the soluble silica present in the water to be treated W1 having a pH and an aluminate ion concentration within predetermined ranges, is deposited in the water to be treated W1 in the soluble silica deposition section 13. Therefore, the water treatment device 1 that can efficiently remove the soluble silica in the water to be treated W1 can be achieved.

Note that, in this embodiment, although the example where the pH of the water to be treated W1 is adjusted to be within a predetermined range via the pH adjusting agents adding section 11 is described, for cases where the water to be treated W1 having a pH within a predetermined range in advance is used, the pH adjusting agents adding section 11 is not necessarily required. Furthermore, in this embodiment, although the example where the aluminate ion concentration of the water to be treated W1 is adjusted to be within a predetermined range via the aluminate ion adding section 12 is described, for cases where the water to be treated W1 having an aluminate ion concentration within a predetermined range in advance is used, the aluminate ion adding section 12 is not necessarily required. Also, the treated water purifying section 20 is not necessarily required but may be provided as necessary.

### Second embodiment (not part of the invention)

Next, the second embodiment will be described. Note that, hereinafter, components that are the same as those in the water treatment device 1 according to the first embodiment described above will be assigned with the same reference signs, and repeated explanations will be omitted.

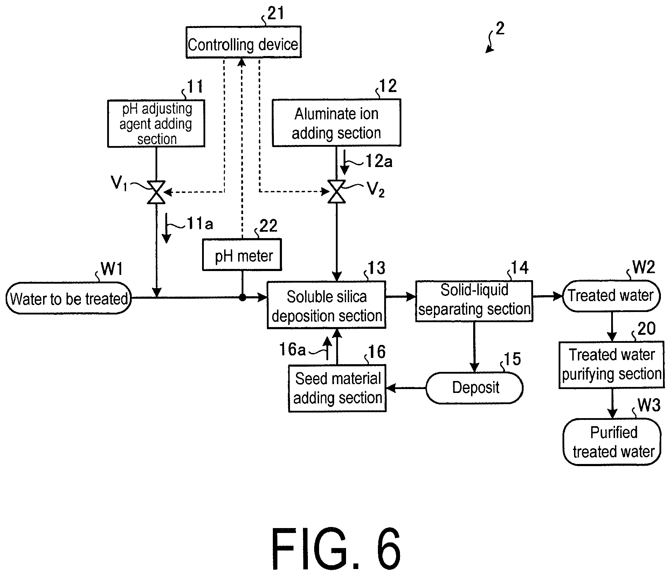

FIG. 6 is a schematic diagram of a water treatment device 2 according to the second embodiment.

As illustrated in FIG. 6, the water treatment device 2 of this embodiment comprises a seed material adding section 16 that adds at least a part of deposit 15 separated in the solid-liquid separating section 14 as a seed material 16a to the deposition section 13. For the other components, descriptions are omitted since the other components are the same as those of the water treatment device 1 according to the first embodiment described above.

In this embodiment, the seed material adding section 16 adds a Si-Al compound that is deposit separated in advance in the solid-liquid separating section 14, such as Mg5Al[AlSi₃O₁₀(OH₂)](OH)₆ and NaAlSi₃O₈, as a seed material for the deposition of the soluble silica from the water to be treated W1. By this addition of the seed material, the deposition rate of the soluble silica from the water to be treated W1 can be increased. Therefore, it is possible to deposit the soluble silica rapidly from the water to be treated W1, and the throughput of the water to be treated W1 is enhanced. Note that, in the present embodiment, although the example where the seed material 16a is added to the deposition section 13 is described, the seed material 16a is added not necessarily to the deposition vessel as long as the seed material 16a is added at an upstream side of the deposition section 13.

In this embodiment, a hydrocyclone is preferably used as the solid-liquid separating section 14. Because of this, it is possible to separate the deposit based on the particle sizes, and thus deposit having a suitable particle size can be used as the seed material 16a, thereby making it possible to efficiently deposit the soluble silica.

### Third embodiment (not part of the invention)

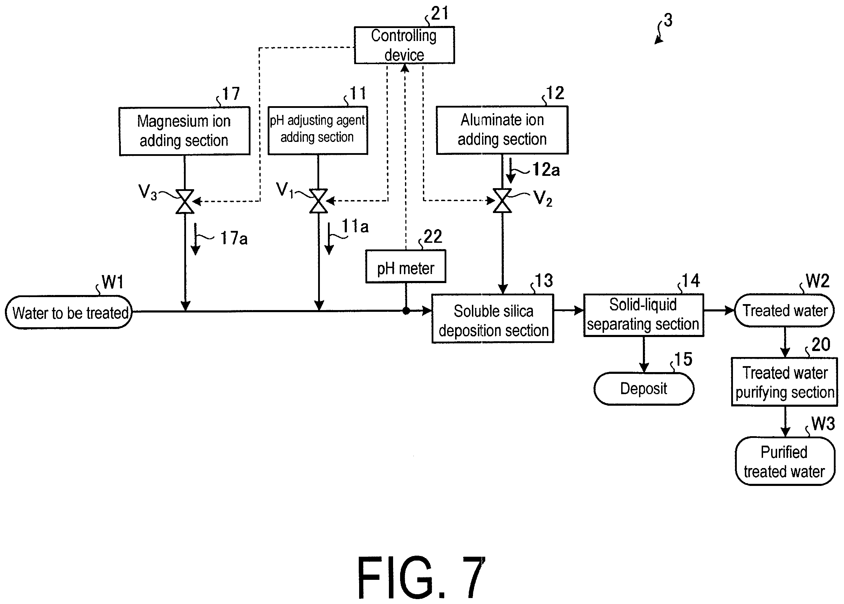

FIG. 7 is a schematic diagram of a water treatment device 3 according to the third embodiment.

As illustrated in FIG. 7, the water treatment device 3 of this embodiment comprises a magnesium ion adding section 17 provided at an upstream side of the pH adjusting agents adding section 11. For the other components, descriptions are omitted since the other components are the same as those of the water treatment device 1 according to the first embodiment described above.

The magnesium ion adding section 17 adds a magnesium ion additive 17a to the water to be treated W1 to adjust the magnesium ion concentration in the water to be treated W1 to be within a predetermined range. Since the magnesium ion concentration in the water to be treated W1 can be adjusted to a suitable range by this, a Mg-Al-Si compound, such as Mg₅Al[AlSi₃O₁₀(OH₂)](OH)₆, is efficiently formed in the deposition in the deposition section 13, and thus the concentration of the soluble silica in the treated water W2 can be further reduced. Furthermore, the aluminum ion concentration remained in the treated water W2 can be also reduced. Note that the added amount of the magnesium ion additive 17a is controlled via a valve V₃ by the controlling device 21.

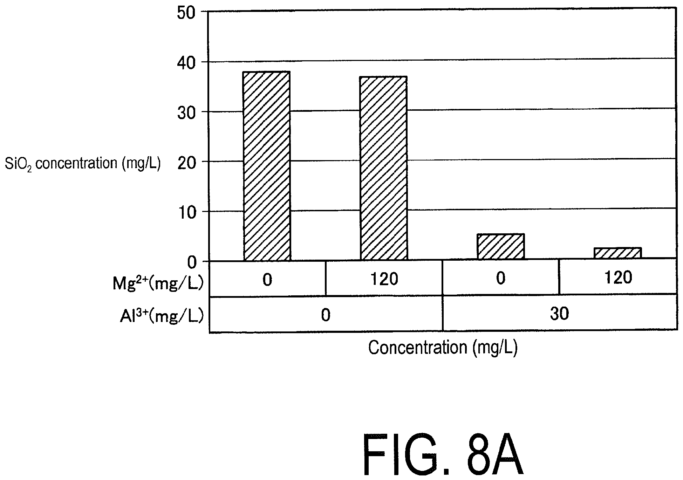

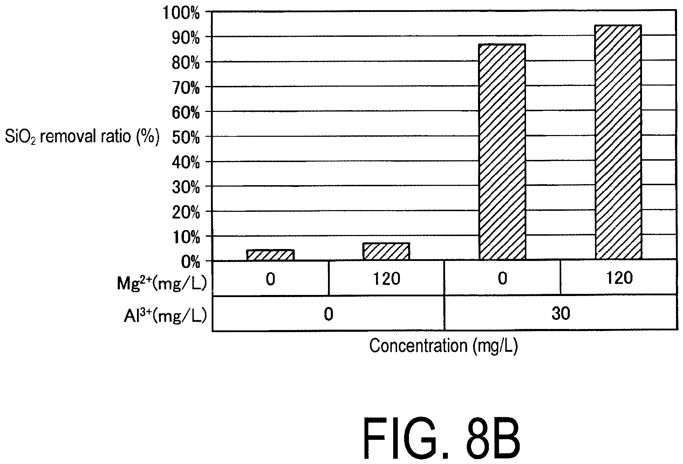

FIG. 8A is a diagram illustrating the relationship for the SiO₂ concentration in the water to be treated after adding magnesium ion. FIG. 8B is a diagram illustrating the relationship for the SiO₂ removal ratio in the water to be treated after adding magnesium ion. Note that, in the examples shown in FIG. 8A and FIG. 8B, the concentration and the removal ratio of the soluble silica for cases where aluminum ion and/or magnesium ion is added to the water to be treated W1 having a pH of 9 and having a concentration of the soluble silica of 40 mg/L at a temperature of 25°C are shown.

As shown in FIG. 8A and FIG. 8B, under conditions where the aluminate ion is 0 mg/L, both the case where the magnesium concentration is 0 mg/L and the case where the magnesium concentration is 120 mg/L do not show significant differences in soluble silica concentrations and removal ratios. On the other hand, under conditions where the aluminate ion is 30 mg/L, although the case where the magnesium concentration is 0 mg/L significantly reduces the soluble silica concentration, by making the magnesium concentration to be 120 mg/L, the soluble silica concentration further decreases while the removal ratio increases. It is conceived that this result is due to the synergistic effect that promotes deposition of the soluble silica caused by the formation of the Mg-Al-Si compound described above as a result of coexistence of the aluminum ion and the magnesium ion.

Examples of the magnesium ion additive 17a include various magnesium salts such as magnesium oxide, magnesium hydroxide, magnesium alkoxide, magnesium acetate, magnesium carbonate, magnesium chloride, and magnesium sulfate. Among these, from the perspective of efficiently depositing soluble silica, an aqueous solution of magnesium sulfate is preferably used.

When the magnesium ion concentration of the water to be treated W1 is 60 mg/L or higher, the removal effect of soluble silica can be achieved. From the perspectives of the removal efficiency of soluble silica and reduction in the used amount of the aluminate ion additive that is added as necessary, it was found that the magnesium ion concentration of the water to be treated W1 is preferably 90 mg/L or higher, and more preferably 120 mg/L or higher.

As the content of the magnesium ion in the water to be treated W1, from the perspective of efficiently depositing soluble silica, the magnesium concentration relative to the soluble silica (Mg/SiO₂) is preferably greater than 0, more preferably 1.5 or greater, and even more preferably 3 or greater, but preferably 10 or less, more preferably 7 or less, and even more preferably 5 or less.

### Fourth embodiment (not part of the invention)

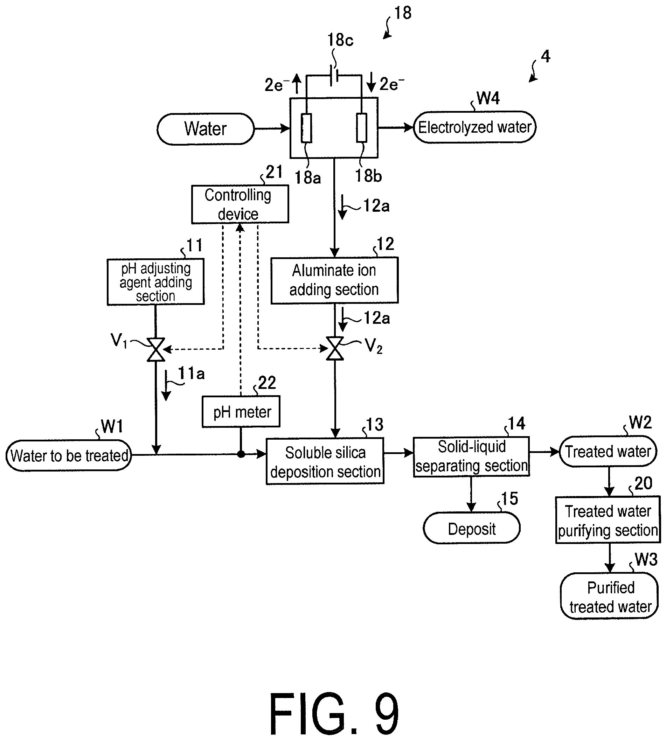

FIG. 9 is a schematic diagram of a water treatment device 4 according to the fourth embodiment.

As illustrated in FIG. 9, the water treatment device 4 of this embodiment comprises an electrolysis section 18 that electrolyzes water to form electrolyzed water W4. As the water to be electrolyzed by the electrolysis section 18, for example, water to be treated W1, treated water W2, purified treated water W3, and the like can be used. For the other components, descriptions are omitted since the other components are the same as those of the water treatment device 1 according to the first embodiment described above.

The electrolysis section 18 comprises an anode 18a composed of aluminum, a cathode 18b composed of titanium or aluminum, and a direct current power supply 18c provided in between the anode 18a and the cathode 18b. In this electrolysis section 18, aluminum ion (Al³⁺) is generated at the anode 18a based on the reaction formula (2) below, and hydroxide ion (OH⁻) is generated at the cathode 18b based on the reaction formula (3) below. Because of this, since aluminate ion-containing water is generated as a result of the reaction between the aluminate ion and the hydroxide ion as expressed in the reaction formula (4) below in this electrolysis section 18, the electrolysis section 18 is the supply source of the aluminate ion. By supplying this aluminate ion-containing water to the aluminate ion adding section 12 as the aluminate ion additive 12a, the aluminate ion additive 12a can be supplied without using another aluminate ion additive.

Al → Al³⁺ + 3e⁻... Formula (2)

2H₂O + 2e⁻ → H₂ + 2OH⁻... Formula (3)

Al³⁺ + 40H⁻ → [Al(OH)₄]⁻... Formula (4)

Note that, in the electrolysis section 18, each of the anode 18a and the cathode 18b may be an aluminum electrode. Due to this, it is possible to generate aluminum ion from each of the anode 18a and the cathode 18b by reversing the polarity by switching the positive electrode and the negative electrode of the direct current power supply 18c.

### Fifth embodiment (forming the present invention)

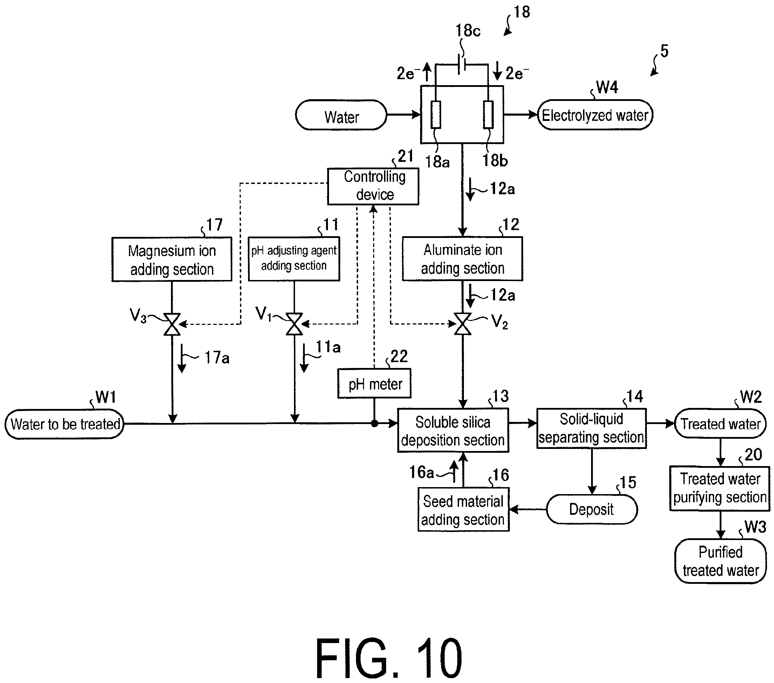

FIG. 10 is a schematic diagram of a water treatment device 5 according to the fifth embodiment and forming the present invention. As illustrated in FIG. 10, this water treatment device 5 is a combination of the configurations of the water treatment devices 1 to 4 according to the first to fourth embodiments described above. The soluble silica concentration in the water to be treated W1 can be further reduced by this.

### Sixth embodiment (not part of the invention)

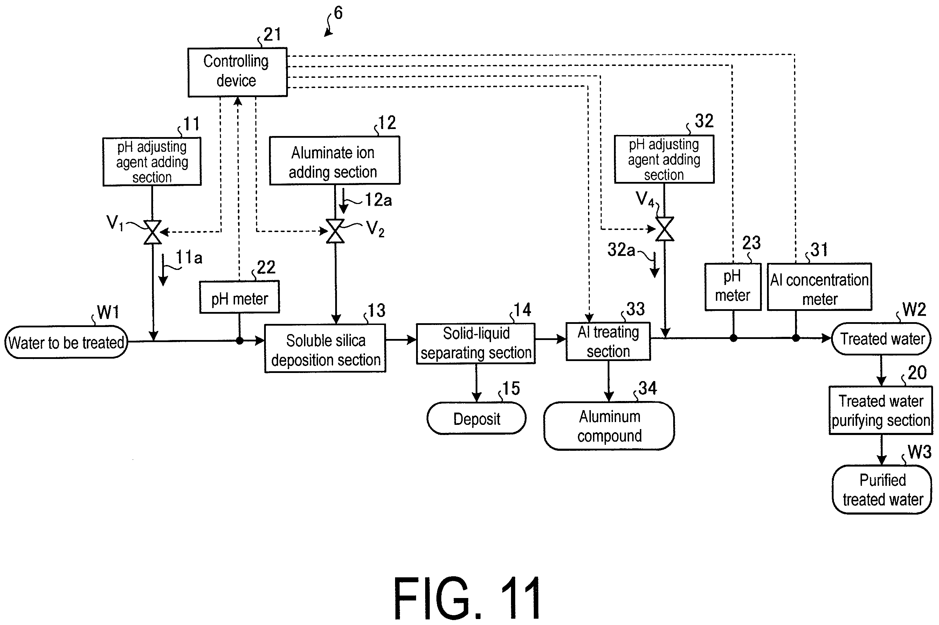

FIG. 11 is a schematic diagram of a water treatment device 6 according to the sixth embodiment. As illustrated in FIG. 11, the water treatment device 6 of this embodiment comprises: an Al treating section 33 that treats aluminum ion in the water to be treated W1, the Al treating section 33 being arranged after a solid-liquid separating apparatus 14; and pH adjusting agents adding section 32 that adjust the pH of the water to be treated W1 by adding the pH adjusting agents 32a to the water to be treated W1, the pH adjusting agents adding section 32 being arranged after the Al treating section 33. For the other components, descriptions are omitted since the other components are the same as those of the water treatment device 1 illustrated in FIG. 1.

The Al treating section 33 deposits the aluminum ion in the water to be treated W1 as an aluminum compound 34 using a chelating resin, ion exchange resin, chelating agent, or the like. Since the aluminum ion concentration in the water to be treated W1 can be reduced by this, negative effects on the treated water purifying section 20 that is arranged as a later step due to the aluminum ion can be reduced.

The Al treating section 33 reduces the aluminum ion concentration of the water to be treated W1, in which the soluble silica has been removed, by the first to fourth treatment methods described below. The first treatment method is a precipitation method by which pH of the water to be treated W1, in which the soluble silica has been removed, is adjusted to a predetermined range to reduce the saturation solubility of the aluminum ion, thereby insolubilizing the aluminum ion in the water to be treated W1 to remove the aluminum ion via solid-liquid separation.

The second treatment method is a chelating resin method by which the water to be treated W1 is passed through a chelating resin column, in which a chelating resin is packed in a cylindrical member, so that heavy metals such as aluminum is adsorbed on the chelating resin, thereby removing the aluminum ion.

The third treatment method is a liquid chelating method by which a liquid chelating agent such as a coagulant is added to the water to be treated W1, so that heavy metals such as aluminum are deposited as insoluble chelate complexes in the water to be treated W1, and then solid-liquid separation is performed to remove the aluminum ion.

The fourth treatment method is a cold lime method by which, as described in formulas (5) to (7) below, slaked lime (Ca(OH)₂) is added to the water to be treated W1 to increase the pH of the water to be treated W1, and by supplying calcium ion and hydroxide ion, calcium carbonate (CaCO³⁻) is deposited by bicarbonate ion (HCO₃⁻) contained in the water to be treated W1 and magnesium hydroxide (Mg(OH)₂) is deposited by magnesium ion (Mg²⁺), to perform solid-liquid separation. In this cold lime method, a part of aluminum ion is coprecipitated and removed.

Ca(HCO₃)₂ + Ca(OH)₂ → 2CaCO₃↓ + 2H₂O... Formula (5)

Mg(HCO₃)2 + 2Ca(OH)₂ ⇒ Mg(OH)₂↓ + 2CaCO₃↓ + 2H₂O... Formula (6)

CaCl₂ + Na₂CO₃ ⇒ 2NaCl + CaCO₃↓... Formula (7)

Note that, when performing the first, third, or fourth treatment method, the Al treating section 33 preferably has another solid-liquid separating apparatus that is separate from the solid-liquid separating section 14 that is provided as a later step. By providing the solid-liquid separating apparatus that is separate from the solid-liquid separating section 14, an aluminum compound 34 can be solid-liquid separated.

Furthermore, in the Al treating section 33, water treatment additives such as a scale inhibitor may be added to the water to be treated W1. Since the aluminum ion saturation solubility to the water to be treated W1 can be enhanced by this, negative effects on a reverse osmosis membrane 30a of the treated water purifying section 20 that is arranged as a later step due to the aluminum ion can be reduced.

The pH regulating device 32 adds pH adjusting agents 32a to the water to be treated W1, in which soluble silica has been removed, to decrease or increase the pH of the water to be treated W1, thereby enhancing the saturation solubility of aluminum ion to the water to be treated W1. Examples of the pH regulator 32a include various acids such as hydrochloric acid, sulfuric acid, and citric acid, and various bases such as sodium hydroxide and calcium hydroxide. The controlling device 21 adjusts the opening of a valve V4 based on the measured value by a pH meter 23 that is provided as a later step after the solid-liquid separating section 14 to adjust the added amount of the pH adjusting agents 32a. Since the aluminum ion saturation solubility to the water to be treated W1 can be enhanced by this, negative effects on the treated water purifying section 20 that is arranged as a later step due to the aluminum ion can be reduced.

When the saturation solubility of aluminum is increased by adding an alkali to the water to be treated W1, the pH regulating device 32 preferably increases the pH of the water to be treated W1 by more than 0, more preferably increases the pH by 0.1 or more, even more preferably increases the pH by 0.3 or more, and yet even more preferably increases the pH by 1.0 or more. Furthermore, when the saturation solubility of aluminum is increased by adding an acid to the water to be treated W1, the pH regulating device 32 can increase the saturation solubility of aluminum by, for example, if the pH of the water to be treated W1 is 9, adjusting the pH of the water to be treated W1 to be 4.2 or lower. For example, when the aluminum concentration in the water to be treated W1 is approximately 0.01 mg/L, the pH regulating device 32 can avoid the deposition of aluminum by adjusting the pH of the water to be treated W1 to be 5.0 or lower, or 6.0 or higher.

For example, when the pH of the wastewater from the solid-liquid separating section 14 is 9, the pH adjusting device 32 can deposit the excessive aluminum from the water to be treated W1 by adjusting the pH to be within a range of 4.5 to 9. Since the solubility of aluminum ion is minimum at pH 5.5, the excessive aluminum is deposited from the water to be treated W1 as an aluminum compound 34 by adjusting the pH to be 4.5 or higher but 9 or lower by adjusting the added amount of the pH adjusting agents 32a. Also, the deposited aluminum compound 34 can be removed together with the deposit 15 in the solid-liquid separating section 14. In this case, from the perspective of adjusting the aluminum concentration of the water to be treated W1 that is introduced to the treated water purifying section 20 to be 0.05 mg/L or lower, the pH of the water to be treated W1 is more preferably within a range of pH 4.8 to 7.0. From the perspective of adjusting the aluminum concentration of the water to be treated W1 that is introduced to the treated water purifying section 20 to be 0.01 mg/L or lower, the pH of the water to be treated W1 is even more preferably within a range of pH 5.0 to 6.0.

Next, the overall operation of the water treatment device 6 according to this embodiment will be described. First, the deposit 15 is removed from the water to be treated W1 in the same manner as for the water treatment device 1 described above. Thereafter, from the water to be treated W1 in which the deposit 15 is separated, aluminum ion is removed by using a chelating resin, ion exchange resin, chelating agent, or the like in the Al treating section 33. At this point, the Al treating section 33 may increase the solubility of the aluminum ion by adding a scale inhibitor. After the pH adjusting agents 32a is added to the water to be treated W1 in the pH regulator adding section 32, so that the pH is adjusted to be within a predetermined range, the water to be treated W1 is then separated to the treated water W2 and the condensed water W3 in the treated water purifying section 20. At this point, the controlling device 21 controls the added amount of the chelating agent or the like, treatment of the ion exchange resin, or the like, so that the aluminum ion concentration in the water to be treated W1 measured by an Al concentration meter 31 is adjusted to be within a predetermined range (e.g. 0.01 mg/L). Furthermore, the controlling device 21 may control the added amount of the aluminate ion added to the deposition vessel 13 to lower the aluminum ion concentration that is introduced to the treated water purifying section 20.

As described above, according to this embodiment, since aluminum ion in the water to be treated W1 is reduced by the Al treating section 33 that is provided as a later step after the solid-liquid separating section 14, the aluminum ion concentration of the water to be treated W1 that is introduced to the treated water purifying section 20 can be further lowered compared to the water treatment device 1 described above. Therefore, it is possible to further decrease the effects of aluminum ion on the treated water purifying section 20.

### Seventh embodiment (not part of the invention)

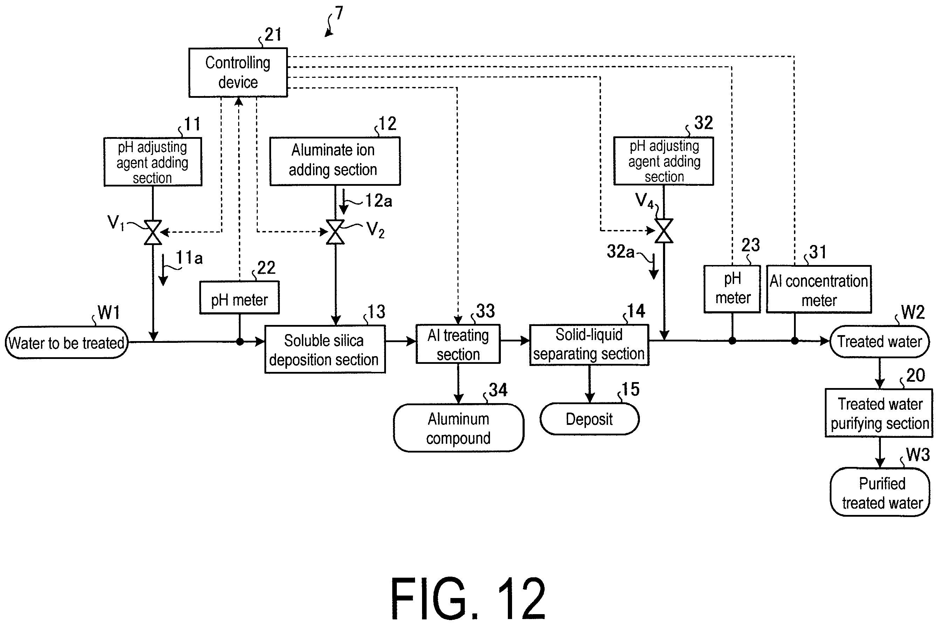

FIG. 12 is a schematic diagram of a water treatment device 7 according to the seventh embodiment. As illustrated in FIG. 12, the water treatment device 3 of this embodiment comprises the Al treating section 33 of the water treatment device 2 described above provided in between the soluble silica deposition section 13 and the solid-liquid separating section 14. For the other components, descriptions are omitted since the other components are the same as those of the water treatment device 2 described above.

As described above, according to this embodiment, since aluminum is deposited in the Al treating section 33 and the aluminum ion is then removed together with the deposit 15 by the solid-liquid separating section 14, the aluminum ion concentration of the water to be treated W1 that is introduced to the treated water purifying section 20 can be further lowered compared to the water treatment device 1 described above. Therefore, it is possible to further decrease the effects of aluminum ion on the treated water purifying section 20.

Note that, in the sixth embodiment described above, the configuration in which the Al treating section 33 is arranged after the solid-liquid separating section 14 is described, and in the seventh embodiment described above, the configuration in which the Al treating section 33 is arranged prior to the solid-liquid separating section 14 is described; however, the Al treating sections 33 may be arranged prior to and after the solid-liquid separating section 14. By this, since the aluminum ion in the water to be treated W1, in which the soluble silica has been removed, can be further removed as the aluminum compound 34 after separating the deposit 15 in the solid-liquid separating section 14 following the reduction of the aluminum ion concentration in the water to be treated W1 by the Al treating section 33 that is provided prior to the solid-liquid separating section 14, the concentration of the aluminum ion supplied to the treated water purifying section 20 can be further reduced.

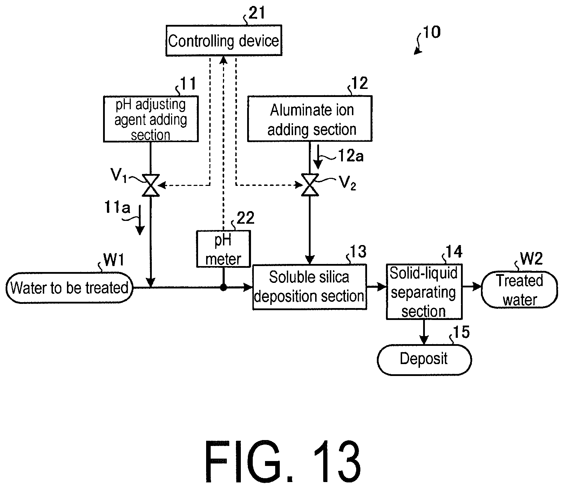

Hereinafter, Application Examples of the water treatment devices according to the embodiments described above will be described. Note that, hereinafter, examples in which a soluble silica removing section 10, illustrated in FIG. 13 having the same configuration as the water treatment device 1 according to the embodiments described above, is applied to various water treatment devices will be described. As illustrated in FIG. 13, this soluble silica removing section 10 comprises: pH adjusting agents adding section 11 by which pH adjusting agents 11a is added to water to be treated W1; an aluminate ion adding section 12 by which an aluminate ion additive 12a is added to the water to be treated W1 in which the pH regulator 11a has been added; a soluble silica deposition section 13 by which soluble silica is deposited from the water to be treated W1 in which the aluminate ion has been added; and a solid-liquid separating section 14 by which treated water W2 is obtained by solid-liquid separating the soluble silica that has been deposited.

### Application Example 1

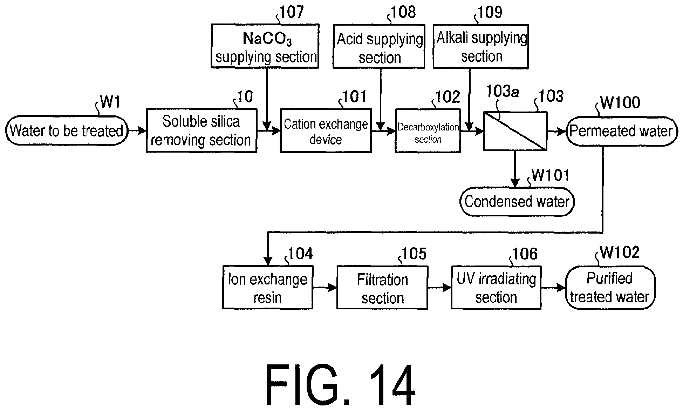

FIG. 14 is a schematic diagram of a water treatment device 100 of Application Example 1. As illustrated in FIG. 14, this water treatment device 100 is a pre-treatment device for supply water for a reverse osmosis plant for purifying high purity water for semiconductor manufacturing. The water treatment device 100 comprises: a soluble silica removing section 10 by which soluble silica in the water to be treated W1 is removed; a cation exchange device 101, as a purifying apparatus for the water to be treated, by which the treated water W2 is treated by a weakly acidic cation exchange resin to remove bicarbonate and aluminum ion; a decarboxylation section 102 by which carbon dioxide gas is removed from the treated water W2 in which bicarbonate and aluminum ion have been removed; and a reverse osmosis membrane filtration section 103 by which permeated water W100 and condensed water W101 are obtained by subjecting the treated water W2, which has been decarboxylated, to the filtration using a reverse osmosis membrane 103a.

The permeated water W100 that has permeated through the reverse osmosis membrane filtration section 103 is further purified by an ion exchange resin 104 such as a cation exchange device or an anion exchange device, and after the permeated water W100 has undergone final filtration in a filtration section 105, the permeated water W100 is subjected to UV radiation in a UV irradiating section 106 to kill organisms and used as a purified treated water W102. In between the soluble silica removing section 10 and the cation exchange device 101, a Na₂CO₃ supplying section 107 that supplies Na₂CO₃ to the water to be treated W1 in which soluble silica has been removed is provided. In between the cation exchange device 101 and the decarboxylation section 102, an acid supplying section 108 that supplies an acid to the water to be treated W1 that has been purified by ion exchange is provided. In between the decarboxylation section 102 and the reverse osmosis membrane filtration section 103, an alkali supplying section 109 that supplies alkali to the water to be treated W1 that has been decarboxylated is provided. Note that, in this water treatment device 100, the arrangement of the soluble silica removing section 10 may be suitably modified as long as the soluble silica removing section 10 is arranged at an upstream side of the reverse osmosis membrane filtration section 103. As described above, in this embodiment, the treated water W2 that has been treated in the soluble silica removing section 10 may be used after being further purified by the cation exchange device 101 or the like.

### Application Example 2

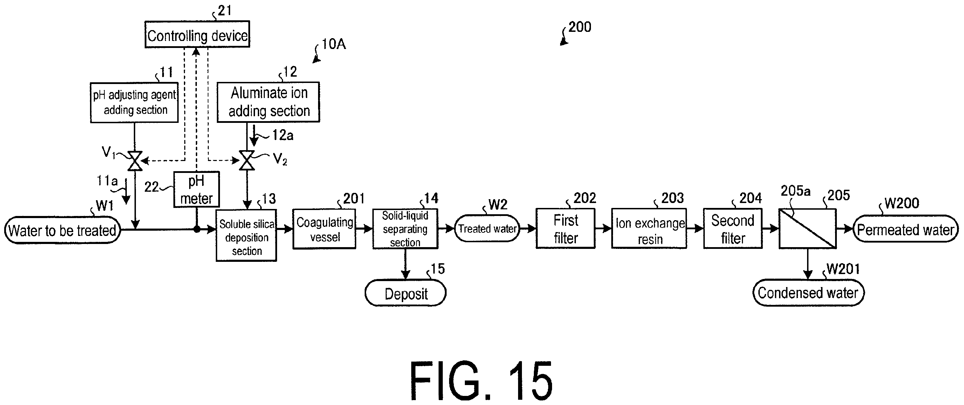

FIG. 15 is a schematic diagram of a water treatment device 200 of Application Example 2. As illustrated in FIG. 15, this water treatment device 200 is a treatment device for wastewater containing suspension and/or dissolved solids, such as a high concentration of organic substances and silica. In this water treatment device 200, a soluble silica removing section 10A comprises a coagulating vessel 201 that further coagulates the soluble silica in the water to be treated W1 after the soluble silica deposition section 13. In this coagulating vessel 201, the soluble silica in the water to be treated W1, in which aluminate ion has been added from the aluminate ion adding section 12, is deposited together with the coagulant, such as iron chloride, in the water to be treated W1. After the treated water W2 and the deposit 15 are obtained by separating the soluble silica deposited in the solid-liquid separating section 14, the treated water W2 is filtered using a first filter 202 composed of a multi media filter. Thereafter, aluminum ion contained in the treated water W2 is removed by an ion exchange resin 203, as a purifying section of the water to be treated. After the treated water W2 is filtered using a second filter 204 composed of a cartridge filter, the permeated water W200 and the condensed water W201 are separated in a reverse osmosis membrane filtration section 205 having a reverse osmosis membrane 205a. As described above, in this embodiment, the treated water W2 that has been treated in the soluble silica removing section 10 may be used after being further purified by the ion exchange resin 203 or the like.

### Application Example 3

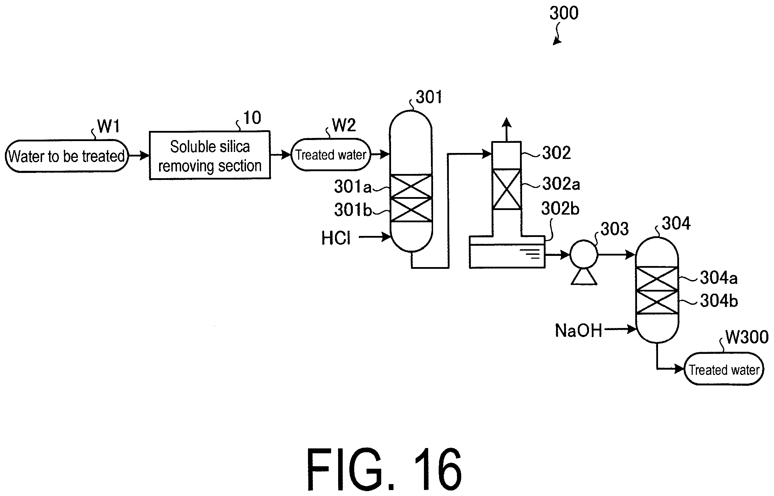

FIG. 16 is a schematic diagram of a water treatment device 300 of Application Example 3. As illustrated in FIG. 16, this water treatment device 300 comprises a first demineralizer 301, as a purifying section of the water to be treated, that is provided after the soluble silica removing section 10; a degassing column 302 that is provided after the demineralizer; and a second demineralizer 304 that is provided after the degassing column 302. After the treated water W2 that is introduced to the first demineralizer 301 undergoes ion exchange via a first ion exchange resin 301a and a second ion exchange resin 301b, hydrochloric acid is supplied to the column bottom, and then the treated water W2 is supplied to the degassing column 302. The treated water W2 that is supplied to the degassing column 302 is washed in a washing section 302a and then collected in a column bottom 302b. The treated water W2 that is collected in the column bottom 302b of the degassing column 302 is introduced to the second demineralizer 304 via a pump 303, and then subjected to ion exchange via a first ion exchange resin 304a and a second ion exchange resin 304b. Thereafter, the pH of the treated water W2 is adjusted to a predetermined pH by being supplied with sodium hydroxide aqueous solution in the column bottom to become the treated water W300. By performing these treatments, it is possible to lower the consumption rate of the ion exchange resin. Note that the arrangement of the soluble silica removing section 10 may be suitably modified as long as the soluble silica removing section 10 is arranged at an upstream side of the second ion exchange resin 304b of the second demineralizer 304. As described above, in this Application Example 3, the treated water W2 that has been treated in the soluble silica removing section 10 may be used after being further purified by the anion exchange resin or the like.

As the first ion exchange resins 301a and 304a and the second ion exchange resins 301b and 304b of the first demineralizer 301 and the second demineralizer 304, various anion exchange resins and cation exchange resins can be suitably combined for use. In this Application Example 3, as the first ion exchange resin 301a and the second ion exchange resin 301b of the first demineralizer 301, strongly acidic cation exchange resins are preferably used, and as the first ion exchange resin 304a and the second ion exchange resin 304b of the second demineralizer 304, strongly basic anion exchange resins are preferably used.

Note that, the configuration of the water treatment device 300 comprising the first demineralizer 301, the degassing column 302, and the second demineralizer 304 in Application Example 3 described above can be suitably modified. In the water treatment device 300, the configuration in which the degassing column 302 and the second demineralizer 304 are omitted can be employed. In this case, the first demineralizer 301 preferably comprises a strongly acidic cation resin as the first ion exchange resin 301a, and a strongly basic anion resin as the second cation exchange resin 301b. By employing such a configuration, the treated water W300 can be efficiently obtained when the ion concentration in the water to be treated W1 is low. Also in this case, by removing the soluble silica in the water to be treated W1 by the soluble silica removing section 10, the amount of chemicals that is necessary to regenerate the strongly basic anion resin and the used amount of the strongly basic anion resin can be lowered.

Furthermore, in the water treatment device 300, a third demineralizer that further polishes the treated water W300 after the second demineralizer 304 may be provided. In this case, the third demineralizer preferably comprises a strongly acidic cation resin as a first ion exchange resin, and a strongly basic anion resin as a second cation exchange resin. By employing such a configuration, the purity of the treated water W300 can be further enhanced. Also in this case, by removing the soluble silica in the water to be treated W1 by the soluble silica removing section 10, the amount of chemicals that is necessary to regenerate the strongly basic anion resins of the first ion exchange resins 301a and 304a and the second ion exchange resins 301b and 304b of the first demineralizer 301 and the second demineralizer 304 as well as the strongly basic anion resin of the third demineralizer, and the used amount of the strongly basic anion resins can be lowered.

### Application Example 4

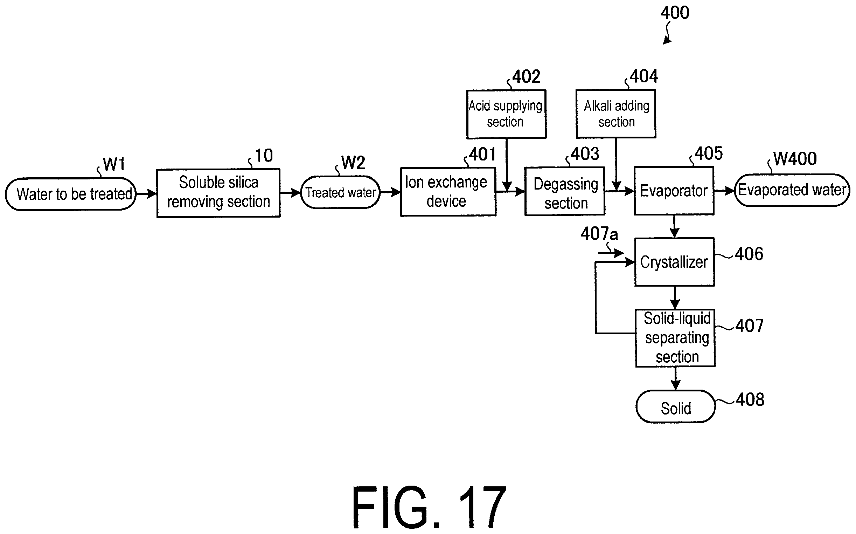

FIG. 17 is a schematic diagram of a water treatment device 400 of Application Example 4. As illustrated in FIG. 17, this water treatment device 400 is a water treatment device for suppressing scale that is attached during evaporation operation, by treating water containing organic substances and inorganic substances. This water treatment device 400 comprises: an ion exchange device 401 that is provided after the soluble silica removing section 10; an acid supplying section 402 that supplies an acid to the treated water W2 that has undergone ion exchange in the ion exchange device 401; a degassing section 403 that is provided after the ion exchange device 401; an alkali adding section 404 that adds alkali to the treated water W2 that has been degassed in the degassing section 403; and an evaporator 405, as the purifying section of the water to be treated, that is provided after the alkali adding section 404.

The ion exchange device 401 purifies the water to be treated W1, in which soluble silica has been removed, by ion exchange. The acid supplying section 402 adjusts the pH to be within the predetermined range by adding an acid to the water to be treated W1 that has been purified by ion exchange. The degassing section 403 removes carbon dioxide gas contained in the treated water W2. The alkali adding section 404 increases the pH of the treated water W2 by adding alkali to the treated water W2 in which carbon dioxide gas has been removed. The evaporator 405 provides evaporated water W400 by evaporating the basic treated water W2 and takes out the condensed water from the column bottom and supplies the condensed water to the crystallizer 406. In the crystallizer 406, the condensed water, which has been condensed by the evaporator 405 in a range that does not deposit crystals, is subjected to deposition, and the deposited solid 408 is separated in the solid-liquid separating section 407. The condensed liquid 407a that has been separated in the solid-liquid separating section 407 is supplied again to the crystallizer 406. As described above, in this embodiment, the treated water W2 that has been treated in the soluble silica removing section 10 may be used after being further purified by the ion exchange device 401, the evaporator 405, or the like. Also in this case, since the soluble silica in the water to be treated W1 is reduced in the soluble silica removing section 10, purification efficiencies of the water to be treated W1 in the ion exchange device 401 and the evaporator 405 are enhanced.

### Examples

Hereinafter, the present invention will be further described based on a working example and a comparative example performed to make the effects of the present invention clear. Note that the present invention is not limited by the working example and the comparative example described below.

### (Working Example)

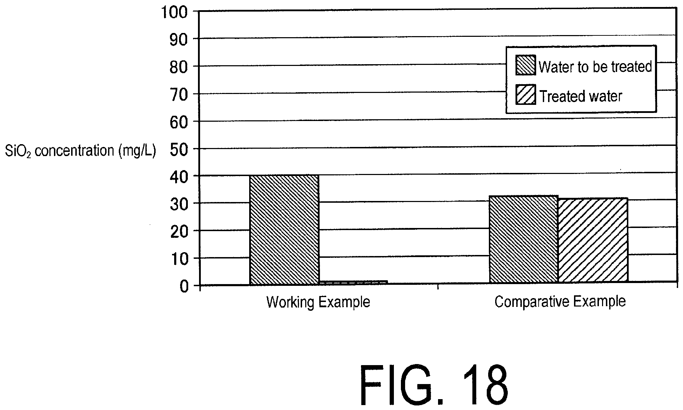

Purified treated water was produced by adding sodium aluminate to water to be treated and removing soluble silica using a water treating device illustrated in FIG. 1. The pH of the water to be treated was 10. The temperature was at 25°C. The soluble silica concentration in the water to be treated was 40 mg/L, the aluminate ion concentration was 157 mg/L, and the magnesium ion concentration was 120 mg/L. As a result, as shown in FIG. 18, the soluble silica in the water to be treated was deposited and the soluble silica concentration in the treated water was significantly reduced (water to be treated: 40 mg/L → treated water: 0.8 mg/L). Furthermore, as a result of conducting composition analysis of the deposit by X-ray fluorescence analysis, Mg, Al, and Si were coexisted in the deposit.

### Comparative Example

Water to be treated was treated in the same manner as in Working Example except for aluminum sulfate was used in place of sodium aluminate. As a result, as shown in FIG. 18, the soluble silica in the water to be treated was not deposited and the soluble silica concentration in the treated water was not reduced (water to be treated: 32 mg/L → treated water: 31 mg/L). It is thought that this result is because a compound of the aluminate ion and the soluble silica is not deposited in the water to be treated since the aluminate ion was not produced in the water to be treated, for cases where aluminum sulfate was used.

### Reference Signs List

1, 2, 3, 4, 5, 6, 7 Water treatment device
11 pH adjusting agents adding section
11a pH adjusting agents
12 Aluminate ion adding section
12a Aluminate ion additive
13 Deposition section
14 Solid-liquid separating section
15 Deposit
16 Seed material adding section
16a Seed material
17 Magnesium ion adding section
17a Magnesium ion additive
18 Electrolysis section
18a Anode
18b Cathode
18c Direct current power supply
20 Treated water purifying section
21 Controlling device
22 pH meter
W1 Water to be treated
W2 Treated water
W3 Purified treated water

## Claims

1. A water treatment device, comprising:
a magnesium ion adding section (17) that is configured for adding a magnesium ion additive (17a) to water to be treated (W1);
a pH adjusting agents adding section (11) that is arranged downstream of the magnesium ion adding section (17) and that is configured for adding pH adjusting agents (11a) to the water to be treated (W1) containing soluble silica, to thereby adjust the pH of the water to be treated (W1) to a pH of 5.5 or higher;
a soluble silica deposition section (13) that is arranged downstream of the pH adjusting agents adding section (11) and that is configured for depositing soluble silica dissolved in the water to be treated (W1);
an aluminate ion adding section (12) that is configured for adding sodium aluminate as an aluminate ion additive (12a) represented by general formula [Al(OH)₄]⁻ to the water to be treated (W1) in the soluble silica deposition section (13), to thereby adjust the aluminate ion concentration in the water to be treated (W1) in such a manner that the concentration ratio of aluminum ions to the soluble silica (mol Al/mol SiO₂) is 0.5 or higher;
a seed material adding section (16) that is configured for adding soluble silica that is deposited in advance from the water to be treated (W1), as a seed material (16a), to the water to be treated (W1) in the soluble silica deposition section (13);
a solid-liquid separating section (14) that is arranged downstream of the soluble silica deposition section (13) and that is configured for separating the deposited soluble silica from the water to be treated (W1), to thereby obtain treated water (W2) formed by removing the soluble silica from the water to be treated (W1); and
a treated water purifying section (20) that is arranged downstream of the solid-liquid separating section (14) and that includes at least one type selected from the group consisting of: an evaporating section that is configured for obtaining purified treated water (W3) by evaporating the treated water (W2); a crystallizing section that is configured for obtaining purified treated water (W3) by crystallizing the treated water (W2); and an ion exchange resin section that is configured for obtaining purified treated water (W3) by ion-exchanging the treated water (W2).

2. The water treatment device according to claim 1, further comprising an electrolysis apparatus (18) that is configured for supplying aluminate ion-containing water generated by electrolyzing a part of the water to be treated (W1) to the aluminate ion adding section (12) as the aluminate ion additive (12a), wherein the electrolysis apparatus (18) comprises an anode (18a) composed of aluminum and a cathode (18b) composed of titanium or aluminum.

3. The water treatment device according to claim 1 or 2, further comprising an aluminum ion treating section (33) that is configured for removing aluminum ion contained in the treated water (W2) to be supplied to the treated water purifying section (20).

4. A water treatment method, comprising:
a magnesium ion additive step of adding a magnesium ion additive to water to be treated (W1);
a pH adjusting step of adjusting the pH of the water to be treated (W1) containing soluble silica by adding pH adjusting agents (11a) to the water to be treated (W1) after the magnesium ion additive step, to thereby adjust the pH of the water to be treated (W1) to a pH of 5.5 or higher;
a deposition step of depositing soluble silica dissolved in water to be treated (W1) after the pH adjusting step;
an aluminate ion adding step of adding sodium aluminate as an aluminate ion additive (12a) represented by general formula [Al(OH)₄]⁻ to the water to be treated (W1) in the deposition step, to thereby adjust the aluminate ion concentration in the water to be treated (W1) in such a manner that the concentration ratio of aluminum ions to the soluble silica (mol Al/mol SiO₂) is 0.5 or higher;
a seed material adding step of adding soluble silica that is deposited in advance from the water to be treated (W1), as a seed material (16a), to the water to be treated (W1) in the deposition step;
a solid-liquid separating step of separating the deposited soluble silica from the water to be treated (W1) after the deposition step, to thereby obtain treated water (W2) formed by removing the soluble silica from the water to be treated (W1); and
a treated water purifying step of purifying the treated water (W2) using a treated water purifying section (20) including at least one type selected from the group consisting of: an evaporating section by which purified treated water (W3) is obtained by evaporating the treated water (W2); a crystallizing section by which purified treated water (W3) is obtained by crystallizing the treated water (W2); and an ion exchange resin section by which purified treated water (W3) is obtained by ion-exchanging the treated water (W2), after the solid-liquid separating step.

5. The water treatment method according to claim 4, wherein aluminate ion-containing water generated by electrolyzing a part of the water to be treated (W1) using an electrolysis apparatus (18) comprising an anode (18a) composed of aluminum and a cathode (18b) composed of titanium or aluminum is added to the water to be treated (W1) as the aluminate ion additive (12a).

6. The water treatment method according to claim 4 or 5, wherein the aluminum ion contained in the treated water (W2) to be supplied to the treated water purifying section (20) is removed by an aluminum ion treating section (33).

## Patentansprüche

1. Wasserbehandlungsvorrichtung, umfassend:
eine Magnesiumionen-Zugabesektion (17), welche dazu konzipiert ist, einem zu behandelnden Wasser (W1) ein Magnesiumionenadditiv (17a) hinzuzufügen;
eine pH-Einstellmittel-Zugabesektion (11), welche stromabwärts der Magnesiumionen-Zugabesektion (17) angeordnet ist und welche dazu konzipiert ist, dem zu behandelnden, lösliches Siliziumdioxid enthaltenden Wasser (W1) pH-Einstellmittel (11a) hinzuzufügen, um auf diese Weise den pH des zu behandelnden Wassers (W1) auf einen pH von 5.5 oder höher einzustellen;
eine lösliches Siliziumdioxid-Abscheidesektion (13), welche stromabwärts der pH-Einstellmittel-Zugabesektion (11) angeordnet ist und welche dazu konzipiert ist, lösliches Siliziumdioxid abzuscheiden, das in dem zu behandelnden Wasser (W1) gelöst ist;
eine Aluminationen-Zugabesektion (12), welche dazu konzipiert ist, dem zu behandelnden Wasser (W1) in der lösliches Siliziumdioxid-Abscheidesektion (13) Natriumaluminat als ein durch die allgemeine Formel [Al(OH)₄]⁻ dargestelltes Aluminationenadditiv (12a) hinzuzufügen, um auf diese Weise die Aluminationenkonzentration in dem zu behandelnden Wasser (W1) derart zu regulieren, dass das Konzentrationsverhältnis von Aluminiumionen zu löslichem Siliziumdioxid (mol Al/mol SiO₂) 0.5 oder höher ist;
eine Keimmaterial-Zugabesektion (16), welche dazu konzipiert ist, dem zu behandelnden Wasser (W1) in der lösliches Siliziumdioxid-Abscheidesektion (13) lösliches Siliziumdioxid, das vorab aus dem zu behandelnden Wasser (W1) abgeschieden worden ist, als Keimmaterial (16a) hinzuzufügen;
eine Fest-Flüssig-Trennsektion (14), welche stromabwärts der lösliches Siliziumdioxid-Abscheidesektion (13) angeordnet ist und welche dazu konzipiert ist, das abgeschiedene lösliche Siliziumdioxid aus dem zu behandelnden Wasser (W1) abzutrennen, um auf diese Weise behandeltes Wasser (W2) zu erhalten, das durch Entfernen des löslichen Siliziumdioxids aus dem zu behandelnden Wasser (W1) gebildet wird; und
eine behandeltes Wasser-Reinigungssektion (20), welche stromabwärts der Fest-Flüssig-Trennsektion (14) angeordnet ist und welche zumindest eine Art ausgewählt aus der Gruppe bestehend aus: einer Verdampfungssektion, welche dazu konzipiert ist, gereinigtes behandeltes Wasser (W3) durch Verdampfen des behandelten Wassers (W2) zu erhalten; einer Kristallisationssektion, welche dazu konzipiert ist, gereinigtes behandeltes Wasser (W3) durch Kristallisieren des behandelten Wassers (W2) zu erhalten; und einer Ionenaustauscherharz-Sektion, welche dazu konzipiert ist, gereinigtes behandeltes Wasser (W3) durch Ionenaustauschen des behandelten Wassers (W2) zu erhalten, umfasst.

2. Wasserbehandlungsvorrichtung nach Anspruch 1, weiterhin umfassend eine Elektrolyseapparatur (18), welche dazu konzipiert ist, der Aluminationen-Zugabesektion (12) Aluminationen-enthaltendes Wasser, das durch Elektrolysieren eines Teils des zu behandelnden Wassers (W1) erzeugt worden ist, als Aluminationenadditiv (12a) zuzuführen, wobei die Elektrolyseapparatur (18) eine aus Aluminium bestehende Anode (18a) und eine aus Titan oder Aluminium bestehende Kathode (18b) umfasst.

3. Wasserbehandlungsvorrichtung nach Anspruch 1 oder 2, weiterhin umfassend eine Aluminiumionen-Behandlungssektion (33), welche dazu konzipiert ist, Aluminiumionen zu entfernen, die in dem der behandeltes Wasser-Reinigungssektion (20) zuzuführenden behandelten Wasser (W2) enthalten sind.

4. Wasserbehandlungsverfahren, umfassend:
einen Magnesiumionen-Zugabeschritt, welcher das Hinzufügen eines Magnesiumionenadditivs zu einem zu behandelnden Wasser (W1) vorsieht;
einen pH-Einstellschritt, welcher das Einstellen des pH des zu behandelnden, lösliches Siliziumdioxid enthaltenden Wassers (W1) durch Hinzufügen von pH-Einstellmitteln (11a) zu dem zu behandelnden Wasser (W1) nach dem Magnesiumionen-Zugabeschritt vorsieht, um auf diese Weise den pH des zu behandelnden Wassers (W1) auf einen pH von 5.5 oder höher einzustellen;
einen Abscheidungsschritt, welcher das Abscheiden von löslichem Siliziumdioxid, das in dem zu behandelnden Wasser (W1) gelöst ist, nach dem pH-Einstellschritt vorsieht;
einen Aluminationen-Zugabeschritt, welcher das Hinzufügen von Natriumaluminat als ein durch die allgemeine Formel [Al(OH)₄]⁻ dargestelltes Aluminationenadditiv (12a) zu dem zu behandelnden Wasser (W1) im Abscheidungsschritt vorsieht, um auf diese Weise die Aluminationenkonzentration in dem zu behandelnden Wasser (W1) derart zu regulieren, dass das Konzentrationsverhältnis von Aluminiumionen zu löslichem Siliziumdioxid (mol Al/mol SiO₂) 0.5 oder höher ist;
einen Keimmaterial-Zugabeschritt, welcher das Hinzufügen von löslichem Siliziumdioxid, das vorab aus dem zu behandelnden Wasser (W1) abgeschieden worden ist, als Keimmaterial (16a) zu dem zu behandelnden Wasser (W1) im Abscheidungsschritt vorsieht;
einen Fest-Flüssig-Trennschritt, welcher das Abtrennen des abgeschiedenen löslichen Siliziumdioxids aus dem zu behandelnden Wasser (W1) nach dem Abscheidungsschritt vorsieht, um auf diese Weise behandeltes Wasser (W2) zu erhalten, das durch Entfernen des löslichen Siliziumdioxids aus dem zu behandelnden Wasser (W1) gebildet wird; und
einen behandeltes Wasser-Reinigungsschritt, welcher das Reinigen des behandelten Wassers (W2) nach dem Fest-Flüssig-Trennschritt unter Verwendung einer behandeltes Wasser-Reinigungssektion (20) vorsieht, die zumindest eine Art ausgewählt aus der Gruppe bestehend aus: einer Verdampfungssektion, mittels welcher gereinigtes behandeltes Wasser (W3) durch Verdampfen des behandelten Wassers (W2) erhalten wird; einer Kristallisationssektion, mittels welcher gereinigtes behandeltes Wasser (W3) durch Kristallisieren des behandelten Wassers (W2) erhalten wird; und einer Ionenaustauscherharz-Sektion, mittels welcher gereinigtes behandeltes Wasser (W3) durch Ionenaustauschen des behandelten Wassers (W2) erhalten wird, umfasst.

5. Wasserbehandlungsverfahren nach Anspruch 4, wobei Aluminationen-enthaltendes Wasser, welches durch Elektrolysieren eines Teils des zu behandelnden Wassers (W1) unter Verwendung einer Elektrolyseapparatur (18) erzeugt worden ist, die eine aus Aluminium bestehende Anode (18a) und eine aus Titan oder Aluminium bestehende Kathode (18b) umfasst, dem zu behandelnden Wasser (W1) als Aluminationenadditiv (12a) hinzugefügt wird.

6. Wasserbehandlungsverfahren nach Anspruch 4 oder 5, wobei das Aluminiumion, welches in dem der behandeltes Wasser-Reinigungssektion (20) zuzuführenden behandelten Wasser (W2) enthalten ist, mittels einer Aluminiumionen-Behandlungssektion (33) entfernt wird.

## Revendications

1. Dispositif de traitement d'eau, comprenant :
une section d'ajout d'ions magnésium (17) qui est configurée pour ajouter un additif d'ions magnésium (17a) à l'eau à traiter (W1) ;
une section d'ajout d'agents d'ajustement de pH (11) qui est agencée en aval de la section d'ajout d'ions magnésium (17) et qui est configurée pour ajouter des agents d'ajustement de pH (11a) à l'eau à traiter (W1) contenant de la silice soluble, pour ajuster ainsi le pH de l'eau à traiter (W1) à un pH de 5,5 ou plus ;
une section de dépôt de silice soluble (13) qui est agencée en aval de la section d'ajout d'agents d'ajustement de pH (11) et qui est configurée pour déposer la silice soluble dissoute dans l'eau à traiter (W1) ;
une section d'ajout d'ions aluminates (12) qui est configurée pour ajouter un aluminate de sodium en tant qu'additif d'ions aluminates (12a) représenté par la formule générale [Al(OH)₄]⁻ à l'eau à traiter (W1) dans la section de dépôt de silice soluble (13), pour ajuster ainsi la concentration en ions aluminates dans l'eau à traiter (W1) de manière à ce que le rapport de concentration entre des ions aluminium et la silice soluble (mol Al/mol SiO₂) soit de 0,5 ou plus ;
une section d'ajout de matériau de germe (16) qui est configurée pour ajouter la silice soluble qui est déposée en avance par rapport à l'eau à traiter (W1), en tant que matériau de germe (16a), à l'eau à traiter (W1) dans la section de dépôt de silice soluble (13) ;
une section de séparation solide-liquide (14) qui est agencée en aval de la section de dépôt de silice soluble (13) et qui est configurée pour séparer la silice soluble déposée de l'eau à traiter (W1), pour obtenir ainsi de l'eau traitée (W2) formée en éliminant la silice soluble de l'eau à traiter (W1) ; et
une section de purification d'eau traitée (20) qui est agencée en aval de la section de séparation solide-liquide (14) et qui comporte au moins un type choisi dans le groupe consistant en : une section d'évaporation qui est configurée pour obtenir de l'eau traitée purifiée (W3) en évaporant l'eau traitée (W2) ; une section de cristallisation qui est configurée pour obtenir de l'eau traitée purifiée (W3) en cristallisant l'eau traitée (W2) ; et une section de résine échangeuse d'ions qui est configurée pour obtenir de l'eau traitée purifiée (W3) en réalisant un échange d'ions sur l'eau traitée (W2).

2. Dispositif de traitement d'eau selon la revendication 1, comprenant en outre un appareil d'électrolyse (18) qui est configuré pour fournir de l'eau contenant des ions aluminates générée en électrolysant une partie de l'eau à traiter (W1) à la section d'ajout d'ions aluminates (12) en tant qu'additif d'ions aluminates (12a), dans lequel l'appareil d'électrolyse (18) comprend une anode (18a) composée d'aluminium et une cathode (18b) composée de titane ou d'aluminium.

3. Dispositif de traitement d'eau selon la revendication 1 ou 2, comprenant en outre une section de traitement d'ions aluminium (33) qui est configurée pour éliminer l'ion aluminium contenu dans l'eau traitée (W2) à fournir à la section de purification d'eau traitée (20).

4. Procédé de traitement d'eau, comprenant :
une étape d'ajout d'ions magnésium consistant à ajouter un additif d'ions magnésium à l'eau à traiter (W1) ;
une étape d'ajustement de pH consistant à ajuster le pH de l'eau à traiter (W1) contenant de la silice soluble en ajoutant des agents d'ajustement de pH (11a) à l'eau à traiter (W1) après l'étape d'ajout d'ions magnésium, pour ajuster ainsi le pH de l'eau à traiter (W1) à un pH de 5,5 ou plus ;
une étape de dépôt consistant à déposer la silice soluble dissoute dans l'eau à traiter (W1) après l'étape d'ajustement de pH ;
une étape d'ajout d'ions aluminates consistant à ajouter de l'aluminate de sodium en tant qu'additif d'ions aluminates (12a) représenté par la formule générale [Al(OH)₄]⁻ à l'eau à traiter (W1) à l'étape de dépôt, pour ajuster ainsi la concentration en ions aluminates dans l'eau à traiter (W1) de manière à ce que le rapport de concentration entre les ions aluminium et la silice soluble (mol Al/mol SiO₂) soit de 0,5 ou plus ;
une étape d'ajout de matériau de germe consistant à ajouter de la silice soluble qui est déposée en avance par rapport à l'eau à traiter (W1), en tant que matériau de germe (16a), à l'eau à traiter (W1) à l'étape de dépôt ;
une étape de séparation solide-liquide consistant à séparer la silice soluble déposée de l'eau à traiter (W1) après l'étape de dépôt, pour obtenir ainsi de l'eau traitée (W2) formée en éliminant la silice soluble de l'eau à traiter (W1) ; et
une étape de purification d'eau traitée consistant à purifier l'eau traitée (W2) à l'aide d'une section de purification d'eau traitée (20) comportant au moins un type choisi dans le groupe consistant en : une section d'évaporation par laquelle de l'eau traitée purifiée (W3) est obtenue en évaporant l'eau traitée (W2) ; une section de cristallisation par laquelle de l'eau traitée purifiée (W3) est obtenue en cristallisant l'eau traitée (W2) ; et une section de résine échangeuse d'ions par laquelle de l'eau traitée purifiée (W3) est obtenue en réalisant un échange d'ions sur l'eau traitée (W2), après l'étape de séparation solide-liquide.

5. Procédé de traitement d'eau selon la revendication 4, dans lequel l'eau contenant des ions aluminates générée en électrolysant une partie de l'eau à traiter (W1) à l'aide d'un appareil d'électrolyse (18) comprenant une anode (18a) composée d'aluminium et une cathode (18b) composée de titane ou d'aluminium est ajoutée à l'eau à traiter (W1) en tant qu'additif d'ions aluminates (12a).

6. Procédé de traitement d'eau selon la revendication 4 ou 5, dans lequel l'ion aluminium contenu dans l'eau traitée (W2) à fournir à la section de purification d'eau traitée (20) est éliminé par une section de traitement d'ions aluminium (33).
